# EUROPEAN PATENT SPECIFICATION

(11) **EP 4 094 156 B1**
(45) Date of publication and mention of the grant of the patent: **05.06.2024**
(21) Application number: 20701566.0
(22) Date of filing: 20.01.2020
(51) Int. Cl.: G06F 11/14, G05B 19/18

(54) **MANAGING A SYSTEM CONFIGURATION OF A ROBOT CONTROLLER**
VERWALTUNG EINER SYSTEMKONFIGURATION EINER ROBOTERSTEUERUNG
GESTION D'UNE CONFIGURATION DE SYSTÈME D'UN DISPOSITIF DE COMMANDE DE ROBOT

(43) Date of publication of application: 30.11.2022
(73) Proprietor: ABB SCHWEIZ AG, 5400 Baden (CH)
(72) Inventor: MUSTAPIC, Goran, 724 76 Västerås (SE); NYLEN, Olov, 722 31 Västerås (SE)
(74) Representative: Kransell & Wennborg KB
(86) International application number: PCT/EP2020/051312
(87) International publication number: WO 2021/148106

(56) References cited:
- WO-A1-2019/120571
- US-A1- 2012 254 108
- US-A1- 2018 052 683

## Description

### TECHNICAL FIELD

The present disclosure relates to the field of robotic control and in particular to methods and devices for managing a system configuration of a robot controller.

### BACKGROUND

A robot controller controls movements and other behaviour of a robot in accordance with a system configuration. The system configuration may comprise user-defined project data and project-independent software. The provisioning and maintenance of such system configurations is subject to different requirements than in a personal computer. Since a typical industrial robot cannot easily substitute one robot controller for another in case of failure, downtime is associated with significant costs and must be avoided by various technical measures. Another peculiarity of robot software is that the user community is much less numerous than that of, say, a general-purpose operating system or office-related applications; this limits the pace of bug discovery and fixing, and thereby the frequency at which successive updates are distributed.

As one example of such measures to counteract downtime, the applicant's disclopsure WO2019120571A1 proposes a method where a snapshot of the robot controller is captured, which contains a current system configuration of the robot controller, and the captured snapshot is stored in a backup archive. The one or more snapshots stored in the backup archive are presented in chronological order to a user. Upon receiving user input selecting one of the presented snapshots, corresponding information is retrieved from the backup archive and provided as a restored system configuration.

Furthermore, WO201017835A1 discloses a system for off-line programming of an industrial robot comprising a robot controller for controlling the movements of the robot. The system further comprises an external computer having a programming and simulation tool with the ability of running one or more virtual robot controllers, wherein the real robot controller and the external computer are configured to communicate with each other. The system further comprises a data transfer module configured to, upon request, automatically transfer configuration and program data between the real robot controller and a virtual robot controller running on the external computer, and a filter component configured to filter the transferred configuration and program data according to defined filtering rules. According to one embodiment, the data transfer module is configured to, upon request, automatically create backup files, including configuration and program data, of the robot controller, instruct the filter component to process the backup files according to the filtering rules, and create a virtual robot controller on the external computer based on the filtered backup files.

Further still, US20120254108A1 discloses a cloud synchronization and cloud backup arrangement adapted for use with a robotic device. It offers the user the option of partial backup of a current robot data and partial restoration of a larger backup copy, as may be selected by indicating an application ID, robot ID or user ID.

Neither of the known approaches addresses the needs arising in a robot controller controlling a robot which alternates between multiple tasks. For this purpose, the robot controller may be storing project data relating to a plurality of projects and controls the robot in accordance with a currently selected one of these projects.

### SUMMARY

One objective is to make available a robot controller, a method and corresponding software suitable for the needs discussed above. This objective is solved by the invention defined by the independent claims. Advantageous embodiments are defined by the dependent claims.

In a first aspect, as defined by claim 1 there is provided a method of managing a system configuration of a robot controller configured to control operation of a robot.

Because restore input allows independent restore operation of one, two or more projects or the project-independent software, or combinations thereof, the system configuration can be managed with selectivity and precision. In particular, the present embodiment avoids an unnecessary restore operation of well-functioning portions of the system configuration, which may otherwise jeopardize their integrity. Furthermore, a backup copy may include relatively old but still useful project data which is stored together with an outdated version of the project-independent software that has been superseded by a software update or may even contain errors; in the absence of the present invention, the restoring of the project data would happen at the cost of reverting to the outdated software.

In a second aspect, there is provided a robot controller according to claim 8.

The first and second aspects generally address corresponding requirements in the background art and share the same advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 shows a robot controller according to an embodiment of the invention connected to an industrial robot and a backup memory; and
figure 2 is a flowchart illustrating a method according to an embodiment of the invention for managing a system configuration of a robot controller.

### DETAILED DESCRIPTION

The aspects of the present invention will now be described more fully with reference to the accompanying drawings, on which certain embodiments of the invention are shown. These embodiments should not be construed as limiting but are provided by way of example so that this disclosure will be thorough and complete, and to fully convey the scope of all aspects of invention to those skilled in the art. Like numbers refer to like elements throughout the description.

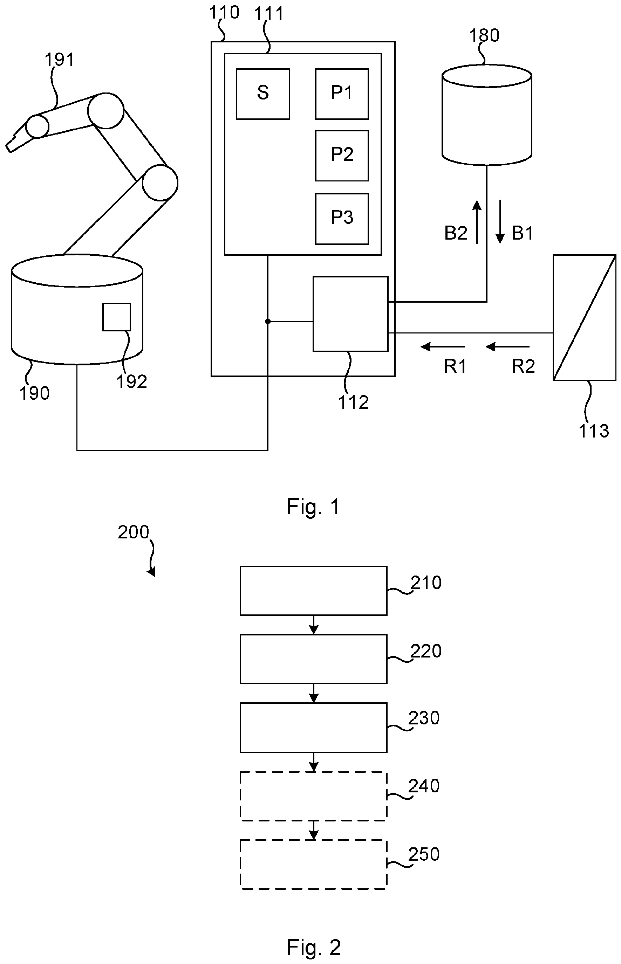

Figure 1 shows a robot controller 110 configured to control a robot 190. While the robot 190 is illustrated as an industrial robot in the example, the teachings of the present invention are applicable to any controllable moving mechanical unit. The robot 190 comprises one robot arm 191, to which there is typically attached a tool during operation. The robot arm 191 comprises one or more motion mechanisms adapted to control motion of the robot arm. Each motion mechanism may comprise a motor unit and a brake unit. The robot controller 110 controls the operation of the robot 190 by controlling the speeds and angles of the motion mechanisms.

The robot 190 may further be associated with a sensor 192 located on the robot (as in the example of figure 1) or in its vicinity. The sensor 192 may be configured to acquire images, sound or measure physicochemical conditions prevailing in the robot 190 or its work area. The sensor 192 may be connected in a wired or wireless fashion.

The robot controller 110 comprises a memory 111 and a processor 112 for executing instructions stored in the memory 111. The processor 112 may consist of a plurality of cooperating sub-processors, which may include distributed or networked processing resources. The processor 112 may include a central processing unit (CPU) or a microcontroller. The robot controller 110 may furthermore be provided with a user interface 113, which includes a visual display or other output device and a keyboard, pointing device or other input device.

The memory 111, which may in particular comprise a fixed or removable non-volatile memory, is configured for storing at least user-defined project data corresponding to three projects P1, P2, P3 and project-independent software S. Project data comprises a definition of a task to be completed by the robot, such as the manipulation of a product. The project data may have been entered or modified by an operator overseeing the regular work of the robot (e.g., via a user interface 113 of the robot controller 110 using a script language or by jogging the robot 190) or by a programmer working at a programming station (not shown), or may have been sourced from a manufacturer of the robot 190 or from an external supplier in accordance with a user's specifications. Different projects may correspond to different products or different processing stages of one product. The project-independent software may relate to behaviour that is applicable across the different project, such as an operating system, routines for initialization, diagnostics or maintenance, generally valid kinematic definitions for translating a requested movement into control signals to the motion mechanisms, filters for motion tracking and the like.

The memory may further be configured to store process data or system data or both. Process data in this sense may include any of measurement data recorded by the sensor 192, calibration data relating to said sensor (e.g., correction factors to be applied to sensor readings) and quality assurance data (e.g., documentation of the manufacturing of a product batch, compliance-related annotations) recorded during operation of the robot 190.

In operation, a user may view via the user interface 113 available projects P1, P2, P3 corresponding to the project data stored in the memory 111. The user selects a desired one of the projects and orders the robot controller 110 to control the robot 190 accordingly. The robot controller 110 may execute the software S in accordance with the project data of the selected project, and optionally in view of process data and/or system data as well. At a later point in time, possibly to initiate a next production batch, the user may select and execute a different one of the projects. Such alternation between different projects is possible without modifying the content of the memory 111. However, depending on the design of the processor 112, some instructions within the software S or project data P1, P2, P3 may need to be copied into a volatile portion of the memory 111 or into a dedicated runtime memory (not shown) for fast retrieval during execution. Likewise, the operation of the robot 190 may generate process data, which is to be stored in memory 111. Neither of these options is an essential requirement for the robot controller's 110 ability to alternate on user's request between projects P1, P2, P3.

The robot controller 110 is associated with a backup memory 180 for storing backup copies of past or current content of the memory 111. Backup copies are generated for safety, to allow fast recovery from an unwanted loss or erasure of the memory 111, such as may result from a hardware or software failure, inadvertent user manipulation, attacks on the integrity of the robot controller 110 and the like. A backup copy may be dated in the sense that it includes or is associated with data representing its generation date. The dating may be used to generate a timeline representation of backup copies, in the manner disclosed in WO2019120571A1.

Like the backed-up memory 111 may comprise project data or project-independent software or both, so does each backup copy. To carry out a partial restore operation according to the claimed invention, the backup copy shall comprise at least user-defined project data. The backup memory 180 is preferably a backup storage in the robot controller, which is logically, operationally or structurally independent of the memory 111; typical characteristics of a backup storage include lower expected failure rate (and thereby higher reliability) but possibly lower read/write speed or higher access latency. Alternatively, the backup memory 180 may be a movable memory, which a user connects to the robot controller 110 to allow the generating of a new backup copy or restoring of memory content from a stored backup copy. Further, the backup memory 180 may be located in a programming station of the kind described above; the programming station may be configured to serve a plurality of robot controllers 180, which means managing backup copies from each of these. A still further option is to implement the backup memory 180 as a networked memory, such as an archive on a server to which the robot controller 110 is connected or connectable as needed.

The restore of a backup copy from the backup memory 180 may be complete or partial. A complete restore may proceed in a conventional manner, such as discussed in WO2019120571A1. To effectuate a partial restore operation, the robot controller 110 may perform one or more of the operations illustrated in figure 2.

More precisely, in a first step 210 of the illustrated method 200, a backup copy B1 is obtained from the backup memory. The step 210 of obtaining may include ensuring that the backup copy exists, locating the backup copy and/or transferring the backup copy to the robot controller 110.

In a second step 220, the robot controller 110 obtains restore input R1. The restore input R1 may be manual or assisted input received from the user via the user interface 113; alternatively, it may be a signal or message received from an entity external to the robot controller 110. The restore input R1 indicates a portion of the data in the backup copy which is to be restored. In particular, the restore input R1 may indicate at least one project for which the corresponding project data is to be restored; alternatively or additionally, it may indicate the project-independent software or a portion thereof, or if applicable the process data or system data. To carry out a partial restore operation according to the claimed invention, the restore input R1 indicates at least a portion of the project data in the backup copy. The user may enter the restore input R1 by choosing from a graphical timeline of backup copies to which the project and/or software selection is added as a further dimension.

In a third step 230, the robot controller 110 performs the partial restore of the backup copy. The partial restore implies that only the portion of the backup copy which is indicated by the restore input R1 is loaded into the memory 111. The loading may include necessary updates to a file system of the memory 111; depending on the architecture of the file system, such updates may affect the information in a root directory, allocation table or the like.

To safeguard data integrity or avoid inadvertent execution of outdated instructions, according to some embodiments, the partial restore step 230 may include at least one data maintenance step. To carry out a partial restore operation according to the claimed invention, the restore input R1 indicates project data relating to one or more projects, and the partial restore step 230 includes deleting such existing project data in the memory 111 that relates to the same project(s) as is indicated by the restore input R1. Such project data is likely to be outdated or even faulty. As an alternative to deleting or erasing the project data, the partial restore step 230 may include overwriting the project data. This avoids inadvertent use of outdated project data and may also free memory space. Conversely, when the restore input R1 indicates user-defined project data only, then any project-independent software in the memory 111 may be left unchanged by the partial restore step 230. Advantageously, this embodiment may reduce the amount of data that is read and written during the backup restore. Furthermore, the positions of the memory 111 that store the software are left intact by the backup restore rather than being exposed to the risk of write errors.

In some embodiments, the robot controller 110 is configured with a partial backup functionality. Generally, the partial backup is one which generates and stores, as the backup copy, a copy of a subset of the content of the memory 111. More precisely, with reference again to figure 2, the method 200 may include the optional fourth step 240 of obtaining a backup selection input R2 which indicates a portion of said user-defined project data and project-independent software in the memory 111. The backup selection input R2 may be provided by a user viewing a current content of the memory 111. This step is followed by a partial backup step 250, in which a partial backup copy B2 that includes only the indicated portion is created. The partial backup copy B2 may be stored in the backup memory 180.

In a variation of this embodiment, backup selection input R2 is obtained in a condition where the memory 111 stores data relating to two or more user-defined projects. The backup selection input R2 indicates a subset of the projects to which the project data relates. The partial backup then includes creating a partial backup copy that includes data relating only to the indicated subset of the projects. This enables dedicated backup of a particular project, as may be appropriate when one project has been configured or refined and is about to be executed for the first time. The dedicated backup is performed without a need to copy either project data relating to the existing projects, which may be already protected by earlier backup copies, or software, which may also be unmodified.

The steps of the illustrated method 200 may be implemented as instructions in a computer program, which when the program is executed by one or more processors (e.g., the processor 112 of the robot controller 110) cause the robot controller 110 to carry out the method 200. The computer program may be distributed or stored on a computer-readable medium, such as the memory 111 of the robot controller 110, a fixed or movable memory, a networked memory, or a non-transitory computer readable medium such as a modulated carrier wave.

The aspects of the present invention have mainly been described above with reference to a few embodiments. However, as is readily appreciated by a person skilled in the art, other embodiments than the ones disclosed above are equally possible within the scope of the invention, as defined by the appended patent claims.

## Claims

1. A method (200) for managing a system configuration of a robot controller (110) configured to control operation of a robot (190), wherein the robot controller comprises a processor (112) and a memory (111), which is configured to store a system configuration including at least user-defined project data (P1, P2, P3), which comprises definitions of tasks to be completed by the robot, and project-independent software (S), the method comprising:
obtaining (210) a backup copy (B1) comprising user-defined project data and project-independent software;
obtaining (220) restore input (R1) indicating a portion of said user-defined project data in the backup copy and optionally a portion of said project-independent software in the backup copy; and
performing (230) a partial restore of the backup copy, wherein only the indicated portion is loaded into the memory of the robot controller, and any project data in the memory relating to the same projects as the indicated project data is deleted or overwritten.

2. The method of claim 1, wherein:
the restore input indicates user-defined project data only; and
the partial restore includes leaving unchanged any project-independent software in the memory.

3. The method of any of the preceding claims, wherein:
the backup copy further comprises process data including one or more of:
measurement data recorded by a sensor (192) associated with the robot, calibration data relating to said sensor, quality assurance data recorded during operation of the robot; and
the restore input indicates a portion of said process data.

4. The method of any of the preceding claims, wherein:
the backup copy further comprises system data including one or more of: an execution log, a failure log, hardware diagnostics data, software diagnostics data, operating system data; and
the restore input indicates a portion of said system data.

5. The method of any of the preceding claims, further comprising:
obtaining (240) backup selection input (R2) indicating a portion of said user-defined project data and project-independent software in the memory;
performing a partial backup (250) of the memory, wherein a partial backup copy (B2) is created that includes only the indicated portion.

6. The method of claim 5, wherein:
while the memory (111) is storing data relating to two or more user-defined projects, the backup selection input (R2) indicates a subset of the projects to which the project data relates; and
the partial backup includes creating a partial backup copy that includes data relating only to the indicated subset of the projects.

7. The method of any of the preceding claims, wherein the backup copy is obtained by retrieval from a backup memory (180) being one of:
an independent backup storage in the robot controller;
a movable memory;
a memory in a programming station configured to serve a plurality of robot controllers;
a networked backup memory.

8. A robot controller (110) configured to control operation of a robot (190), comprising:
a memory (111), which is configured to store a system configuration including at least user-defined project data (P1, P2, P3), which comprises definitions of tasks to be completed by the robot, and project-independent software (S); and
a processor (112) operable to execute the system configuration in accordance with a currently selected project,
the robot controller being configured to:
obtain a backup copy (B1) comprising user-defined project data and project-independent software;
obtain restore input (R1) indicating a portion of said user-defined project data in the backup copy and optionally a portion of said project-independent software in the backup copy; and
perform a partial restore of the backup copy, wherein only the indicated portion is loaded into the memory of the robot controller, and any project data in the memory relating to the same projects as the indicated project data is deleted or overwritten.

9. The robot controller of claim 8, further comprising a user interface (113) configured to receive backup selection input and/or said restore input.

10. A computer program comprising instructions to cause the robot controller of claim 8 to execute the method of any of claims 1 to 7.

11. A computer-readable medium having stored thereon the computer program of claim 10.

## Patentansprüche

1. Verfahren (200) zum Verwalten einer Systemauslegung einer Robotersteuerung (110), die dazu ausgelegt ist, einen Betrieb eines Roboters (190) zu steuern, wobei die Robotersteuerung einen Prozessor (112) und einen Speicher (111) umfasst, der dazu ausgelegt ist, eine Systemauslegung zu speichern, die mindestens benutzerdefinierte Projektdaten (P1, P2, P3), die Definitionen von Aufgaben umfasst, die vom Roboter abzuwickeln sind, und projektunabhängige Software (S) beinhaltet, wobei das Verfahren Folgendes umfasst:
Erhalten (210) einer Sicherungskopie (B1), die benutzerdefinierte Projektdaten und projektunabhängige Software umfasst;
Erhalten (220) einer Wiederherstellungseingabe (R1), die einen Abschnitt der benutzerdefinierten Projektdaten in der Sicherungskopie und wahlweise einen Abschnitt der projektunabhängigen Software in der Sicherungskopie anzeigt; und
Durchführen (230) einer teilweisen Wiederherstellung der Sicherungskopie, wobei nur der angezeigte Abschnitt in den Speicher der Robotersteuerung geladen wird und Projektdaten im Speicher, die dieselben Projekte betreffen wie die angezeigten Projektdaten, gelöscht oder überschrieben werden.

2. Verfahren nach Anspruch 1, wobei:
die Wiederherstellungseingabe nur benutzerdefinierte Projektdaten anzeigt und
die teilweise Wiederherstellung das Unverändertlassen von projektunabhängiger Software im Speicher beinhaltet.

3. Verfahren nach einem der vorhergehenden Ansprüche, wobei:
die Sicherungskopie ferner Prozessdaten umfasst, die eines oder mehreres von Folgendem beinhalten: Messdaten, die von einem Sensor (192) erfasst werden, der mit dem Roboter verknüpft ist, Kalibrierdaten, die den Sensor betreffen, Qualitätssicherungsdaten, die während des Betriebs des Roboters aufgezeichnet werden; und
die Wiederherstellungseingabe einen Abschnitt der Prozessdaten anzeigt.

4. Verfahren nach einem der vorhergehenden Ansprüche, wobei:
die Sicherungskopie ferner Systemdaten umfasst, die eines oder mehreres von Folgendem beinhalten: ein Ausführungsprotokoll, ein Fehlerprotokoll, Hardwarediagnosedaten, Softwarediagnosedaten, Betriebssystemdaten und
die Wiederherstellungseingabe einen Abschnitt der Systemdaten anzeigt.

5. Verfahren nach einem der vorhergehenden Ansprüche, das ferner Folgendes umfasst:
Erhalten (240) einer Sicherungsauswahleingabe (R2), die einen Abschnitt der benutzerdefinierten Projektdaten und projektunabhängige Software im Speicher anzeigt;
Durchführen einer teilweisen Sicherung (250) des Speichers, wobei eine teilweise Sicherungskopie (B2) erstellt wird, die nur den angezeigten Abschnitt beinhaltet.

6. Verfahren nach Anspruch 5, wobei:
während im Speicher (111) Daten gespeichert sind, die zwei oder mehr benutzerdefinierte Projekte betreffen, die Sicherungsauswahleingabe (R2) einen Untersatz der Projekte anzeigt, die die Projektdaten betreffen; und
die teilweise Sicherung das Erstellen einer teilweisen Sicherungskopie beinhaltet, die Daten beinhaltet, die nur den angezeigten Untersatz der Projekte betreffen.

7. Verfahren nach einem der vorhergehenden Ansprüche, wobei die Sicherungskopie durch Abruf aus einem Sicherungsspeicher (180) erhalten wird, bei dem es sich um eines von Folgendem handelt:
ein unabhängiges Sicherungsspeichermedium in der Robotersteuerung;
einen bewegbaren Speicher;
einen Speicher in einer Programmierstation, die dazu ausgelegt ist, eine Vielzahl von Robotersteuerungen zu bedienen;
einen vernetzten Sicherungsspeicher.

8. Robotersteuerung (110), die dazu ausgelegt ist, einen Betrieb eines Roboters (190) zu steuern, und Folgendes umfasst:
einen Speicher (111), der dazu ausgelegt ist, eine Systemauslegung zu speichern, die mindestens benutzerdefinierte Projektdaten (P1, P2, P3), die Definitionen von Aufgaben umfasst, die vom Roboter abzuwickeln sind, und projektunabhängige Software (S) beinhaltet; und
einen Prozessor (112), der betreibbar ist, die Systemauslegung gemäß einem derzeit ausgewählten Projekt auszuführen,
wobei die Robotersteuerung zu Folgendem ausgelegt ist:
Erhalten einer Sicherungskopie (B1), die benutzerdefinierte Projektdaten und projektunabhängige Software umfasst;
Erhalten einer Wiederherstellungseingabe (R1), die einen Abschnitt der benutzerdefinierten Projektdaten in der Sicherungskopie und wahlweise einen Abschnitt der projektunabhängigen Software in der Sicherungskopie anzeigt; und
Durchführen einer teilweisen Wiederherstellung der Sicherungskopie, wobei nur der angezeigte Abschnitt in den Speicher der Robotersteuerung geladen wird und Projektdaten im Speicher, die dieselben Projekte betreffen wie die angezeigten Projektdaten, gelöscht oder überschrieben werden.

9. Robotersteuerung nach Anspruch 8, die ferner eine Benutzerschnittstelle (113) umfasst, die dazu ausgelegt ist, eine Sicherungsauswahleingabe und/oder die Wiederherstellungseingabe zu empfangen.

10. Computerprogramm, das Anweisungen zum Veranlassen der Robotersteuerung nach Anspruch 8, das Verfahren nach einem der Ansprüche 1 bis 7 auszuführen, umfasst.

11. Computerlesbares Medium, auf dem das Computerprogramm nach Anspruch 10 gespeichert ist.

## Revendications

1. Procédé (200) de gestion d'une configuration de système d'un dispositif de commande de robot (110) configuré pour commander le fonctionnement d'un robot (190), le dispositif de commande de robot comprenant un processeur (112) et une mémoire (111) configurée pour stocker une configuration de système comprenant au moins des données de projet définies par l'utilisateur (P1, P2, P3), qui comprennent des définitions de tâches que doit accomplir le robot, ainsi qu'un logiciel indépendant du projet (S), le procédé comprenant les étapes consistant à :
obtenir (210) une copie de sauvegarde (B1) comprenant les données du projet définies par l'utilisateur et le logiciel indépendant du projet ;
obtenir (220) une entrée de restauration (R1) indiquant une partie desdites données de projet définies par l'utilisateur dans la copie de sauvegarde et, éventuellement, une partie dudit logiciel indépendant du projet dans la copie de sauvegarde ; et
effectuer (230) une restauration partielle de la copie de sauvegarde, seule la partie indiquée étant chargée dans la mémoire du dispositif de commande du robot, et toutes les données de projet dans la mémoire, relatives aux mêmes projets que les données de projet indiquées, étant supprimées ou écrasées.

2. Procédé selon la revendication 1, dans lequel :
l'entrée de restauration indique uniquement des données de projet définies par l'utilisateur ; et
la restauration partielle consiste à laisser inchangé tout logiciel indépendant du projet dans la mémoire.

3. Procédé selon l'une quelconque des revendications précédentes, dans lequel :
la copie de sauvegarde comprend en outre des données de processus comprenant un ou plusieurs types des données suivantes : données de mesure enregistrées par un capteur (192) associé au robot, données d'étalonnage relatives audit capteur, données d'assurance qualité enregistrées pendant le fonctionnement du robot ; et
l'entrée de restauration indique une partie desdites données de processus.

4. Procédé selon l'une quelconque des revendications précédentes, dans lequel :
la copie de sauvegarde comprend en outre des données de système comprenant un ou plusieurs types des données suivantes : un journal d'exécution, un journal des défaillances, des données de diagnostic de matériel, des données de diagnostic de logiciel, des données de système d'exploitation ; et
l'entrée de restauration indique une partie desdites données de système.

5. Procédé selon l'une quelconque des revendications précédentes, comprenant en outre les étapes consistant à :
obtenir (240) une entrée de sélection de sauvegarde (R2) indiquant une partie desdites données de projet définies par l'utilisateur et dudit logiciel indépendant du projet dans la mémoire ;
effectuer une sauvegarde partielle (250) de la mémoire, une copie de sauvegarde partielle (B2) étant alors créée et ne comprenant que la partie indiquée.

6. Procédé selon la revendication 5, dans lequel :
alors que la mémoire (111) stocke des données relatives à au moins deux projets définis par l'utilisateur, l'entrée de sélection de sauvegarde (R2) indique un sous-ensemble de projets auxquels se rapportent les données du projet ; et
la sauvegarde partielle consiste à créer une copie de sauvegarde partielle qui comprend des données relatives uniquement au sous-ensemble indiqué des projets.

7. Procédé selon l'une quelconque des revendications précédentes, dans lequel la copie de sauvegarde est obtenue par récupération depuis une mémoire de sauvegarde (180) choisie parmi :
un stockage de sauvegarde indépendant dans le dispositif de commande de robot ;
une mémoire amovible ;
une mémoire dans une station de programmation, configurée pour desservir une pluralité de dispositifs de commande de robot ;
une mémoire de sauvegarde en réseau.

8. Dispositif de commande de robot (110) configuré pour commander le fonctionnement d'un robot (190), le dispositif de commande de robot comprenant :
une mémoire (111) configurée pour stocker une configuration de système comprenant au moins des données de projet définies par l'utilisateur (P1, P2, P3), qui comprennent des définitions de tâches que doit accomplir le robot, ainsi qu'un logiciel indépendant du projet (S) ; et
un processeur (112) fonctionnel pour exécuter la configuration de système selon un projet actuellement sélectionné,
le dispositif de commande de robot étant configuré pour :
obtenir une copie de sauvegarde (B1) comprenant les données du projet définies par l'utilisateur et le logiciel indépendant du projet ;
obtenir une entrée de restauration (R1) indiquant une partie desdites données de projet définies par l'utilisateur dans la copie de sauvegarde et, éventuellement, une partie dudit logiciel indépendant du projet dans la copie de sauvegarde ; et
effectuer une restauration partielle de la copie de sauvegarde, seule la partie indiquée étant chargée dans la mémoire du dispositif de commande du robot, et toutes les données de projet dans la mémoire, relatives aux mêmes projets que les données de projet indiquées, étant supprimées ou écrasées.

9. Dispositif de commande de robot selon la revendication 8, comprenant en outre une interface d'utilisateur (113) configurée pour recevoir une entrée de sélection de sauvegarde et/ou ladite entrée de restauration.

10. Programme informatique, comprenant des instructions pour amener le dispositif de commande de robot selon la revendication 8 à exécuter le procédé selon l'une quelconque des revendications 1 à 7.

11. Support lisible par ordinateur sur lequel est stocké le programme informatique selon la revendication 10.
